# EUROPEAN PATENT APPLICATION

(11) **EP 4 625 314 A1**
(43) Date of publication of application: **01.10.2025**
(21) Application number: 24166975.3
(22) Date of filing: 27.03.2024
(51) Int. Cl.: G06T 7/00, G06T 7/62, G06T 19/00

(54) **METHOD FOR DETERMINING A MINIMUM DISTANCE BETWEEN A TRACER DISTRIBUTION AND AN ANATOMICAL SURFACE**

(71) Applicant: XEOS Medical NV, 9051 Gent (BE)
(72) Inventor: Moore, Jared William, 85718 Tucson (US)
(74) Representative: IP HILLS NV

(57) **Abstract**

Computer-implemented method for determining a minimum distance between a tracer distribution and an anatomical surface, the method comprising the steps of receiving 3D functional image data of a tissue specimen including a tracer from a functional imaging module, receiving 3D anatomical image data from an anatomical imaging module and co-registering said 3D functional image data and said 3D anatomical image data.

## Description

### Field of the Invention

The present invention generally relates to a computer-implemented method for determining a minimum distance between a tracer distribution and an anatomical surface, in particular in dual-modality imaging.

### Background of the Invention

In the field of tissue specimen analysis, an important issue is the evaluation of resection accuracy. Before or after resecting for example tumorous tissues, the surgical margins of the resected tissues need to be assessed in order to be able to decide whether more tissue has to be resected or not since tumorous tissues need to be removed as completely as possible. Thereto, the resected tissues need to have a sufficient margin of tumour free tissues.

It is known to use and combine different imaging techniques in the evaluation of a tissue specimen, which imaging techniques can visualize tumorous tissue. Dual-modality 3-dimensional (3D) imaging systems combine a "functional" and "anatomical" imaging modality. Functional imaging modalities image the distribution of a tracer, in particular of a molecular tracer, for example of a fluorescently labelled tracer or of a radiotracer, or of any other suitably labelled molecule in an object, while the anatomical imaging modality images the overall composition of the object. Examples of functional modalities are single photon emission tomography (SPECT), positron emission tomography (PET) and fluorescence imaging (FI), while examples of anatomical modalities are computed tomography (CT) and magnetic resonance imaging (MRI). Tomographic reconstructions from the functional and anatomical modalities can be overlayed so that tracer uptake might be viewed against the anatomical reference provided by the anatomical modality. A CT imaging module can for example provide images showing an outer surface of a specimen, allowing to detect differences in tissue densities in a tissue specimen and to provide morphological information on the imaged tissue specimen, distinguishing tumorous tissue from healthy tissue. However, the contrast between tumorous and healthy tissue is often limited in CT images. A PET imaging module can detect the distribution of a positron-emitting radiotracer, administered to a patient before imaging, in the body of said patient. As some radiotracers are taken up in tumorous tissue with high specificity, a PET imaging module can for example provide images of tumorous tissue with a relatively high accuracy. Unfortunately, PET images may not provide detailed morphological information. Combining images made by a CT imaging module and by a PET imaging module can therefore be very advantageous in clinical imaging, in particular in margin assessment of a resected tissue specimen.

Instead of combining PET and CT imaging modules, other combinations of functional and anatomical imaging modules can be used. A SPECT imaging module is a functional imaging module which can for example be combined with a CT imaging module or with any other known anatomical imaging module such as an MRI module.

However, even when combining data from functional and anatomical imaging modules, it may be difficult to determine a minimum distance between a point on a bounding surface of a functional image and an outer surface visualized by an anatomical imaging module, which is of interest to a surgeon to evaluate resection accuracy. This may be due to the large data sets of 3D imaging modules and/or to the way of visualization of said 3D images, which are often presented as 2D slices of the 3D images or as projection of 3D data onto a 2D plane. However, said 2D slices or projections may not correspond to a direction of said minimum distance.

It is therefore an aim of the present invention to solve or at least alleviate one or more of the above-mentioned problems. In particular, the invention aims at providing a computer-implemented method for determining a minimum distance between a tracer distribution and an anatomical surface, in particular in dual-modality imaging, allowing a reliable evaluation of resection accuracy of the tissue specimens.

### Summary of the Invention

To this aim, according to a first aspect of the invention, there is provided a computer-implemented method for determining a minimum distance between a tracer distribution and an anatomical surface, in particular in dual-modality imaging, characterized by the features of claim 1. In particular, the method comprises the following steps. First, 3D functional image data of a tissue specimen including a tracer is received from a functional imaging module, for example from a PET imaging module, a SPECT imaging module or a fluorescence imaging module, and 3D anatomical image data is received from an anatomical imaging module, for example from a CT imaging module or from an MRI module. The anatomical image data and the functional image data of the tissue specimen have preferably been acquired substantially simultaneously or sequentially with the tissue specimen being in the same configuration and/or condition. Said 3D functional image data and said 3D anatomical image data are then co-registered according to any known co-registering method. In other words, the coordinate systems of the respective image data are aligned and known relative to one another. Based on said 3D functional image data, a plurality of tracer boundary voxels is selected such that said tracer boundary voxels form an outer bound of a volume having a tracer uptake above a predetermined tracer concentration threshold. The tracer may be a molecular tracer, for example a radio-labelled tracer or a fluorescently labelled tracer. Since it is known that certain types of tissue, for example tumorous tissue, have a higher tracer uptake than other types of tissue, the predetermined tracer concentration threshold can be set such that tissue of interest is selected. Based on said 3D anatomical image data a plurality of anatomical boundary voxels is selected such that said anatomical boundary voxels form an outer anatomical bound of an anatomical volume. As an example, the anatomical volume may be a breast or other body part and the outer anatomical bound may be the skin. In case of an internal body part, such as a liver, the outer anatomical bound is the physical external surface of the liver as seen on the 3D anatomical image data. For each anatomical boundary voxel, a minimum distance between said anatomical boundary voxel and each of the voxels of the list of tracer boundary voxels is determined. The distance is to be understood as a Euclidean distance. Finally, said minimum distance for each anatomical boundary voxel is mapped onto the 3D anatomical image data thus providing a 3D minimum distance map. This 3D minimum distance map can provide a full overview of the minimum distances between an outer surface of a body part, as visualized in the 3D anatomical image data, and tissue with a relatively high tracer uptake, which may be potentially tumorous tissue, which may be valuable information for a user, for example a medical doctor, in preparation for, during, or after surgery.

The method can further advantageously comprise the step of displaying the 3D minimum distance map as a colour coded map, preferably over the 3D anatomical image data. A minimum distance below a first predetermined threshold may for example be coded as red, as an intuitive warning to the user, whereas a minimum distance higher than a predetermined upper threshold may be coded as green, as an intuitive safety indication. Other colours, in particular colour shades, may be used for a variety of predetermined thresholds in between said first threshold and said upper threshold. The use of a colour coded map which is mapped onto and displayed over the 3D anatomical image data, can provide a visual aid allowing relatively quick interpretation of minimum distance data. Other ways of displaying the 3D minimum distance map can be used to an advantage, such as for example a topographic representation with equal value curves.

The 3D minimum distance map can preferably be displayable as a 2D sliced minimum distance map. Since the 3D anatomical image data and/or the 3D functional image data may be displayed as 2D sliced image data to facilitate, the method can overlay a corresponding 2D slice of the 3D minimum distance map on the 2D sliced image data, for example as a colour coded map or in any other way. Such a 2D visualization can again be an aid to a user to quickly assess margin resection of an ex-vivo tissue specimen, or as a preparation for a surgery in case of an in-vivo tissue specimen.

The predetermined tracer concentration threshold may advantageously be adjustable. In this way, the method can allow to provide various minimum distance maps for a plurality of tracer concentration thresholds. As a result, the method can be used for different types of tracers and for various types of tissue in which tracer uptake may vary. Adjustment of the tracer concentration may for example be done via a user interface.

It is preferred that the tissue specimen is an ex-vivo tissue specimen. In other words, the tissue specimen has been resected from a living body and can be manipulated apart from the body, for example for imaging. The method for determining a minimum distance between an anatomical surface and a tracer distribution in dual-modality imaging can then be used to a particular advantage when performing margin assessment of a resected tumorous tissue specimen based on the resulting 3D minimum distance map. The method can even be performed intraoperatively, thus providing reliable feedback to a surgeon during surgery on whether or not sufficient tissue has been resected. In this way, follow-up surgery can be avoided.

The 3D functional image data can preferably be PET image data. 3D PET image data can allow to detect the distribution of a positron-emitting radiotracer, administered to a patient before imaging, in the body of said patient. As some tracers are taken up in tumorous tissue with high specificity, 3D PET image data can for example provide images of tumorous tissue with a relatively high accuracy.

The 3D anatomical image data can preferably be CT image data. CT image data can for example provide images showing an outer surface of a specimen, allowing to detect differences in tissue densities in a tissue specimen and to provide morphological information on the imaged tissue specimen, distinguishing tumorous tissue from healthy tissue. More preferably, the 3D functional image data and the 3D anatomical image data may be multimodal image data, i.e. acquired by a multimodal imaging module, such as for example by a combined PET-CT imaging module allowing capturing both PET image data and CT image data of a tissue specimen without any specimen manipulation in between the image capturing. Such a combined PET-CT imaging module has for example been disclosed in WO 2022/157305, which may be incorporated by reference herein.

According to a further aspect of the invention, there is provided a controller, a computer program product and a computer readable storage medium comprising computer-executable instructions having the features of claims 8, 9 or 10 respectively. Such a controller, computer program product or a computer readable storage medium can provide one or more of the above-mentioned advantages.

### Brief Description of the Drawings

Fig. 1 shows a schematic view of first steps of a preferred embodiment of a computer-implemented method for determining a minimum distance between an anatomical surface and a tracer distribution according to an aspect of the invention;
Fig. 2a, 2b and 2c show schematic 3D results of a preferred embodiment of the method according to an aspect of the invention;
Fig. 3 shows a schematic 2D result of a preferred embodiment of the method according to an aspect of the invention; and
Fig. 4 shows a computing system suitable for performing various steps of the method for determining a minimum distance between an anatomical surface and a tracer distribution in dual-modality imaging according to an aspect of the invention.

### Detailed Description of Embodiment(s)

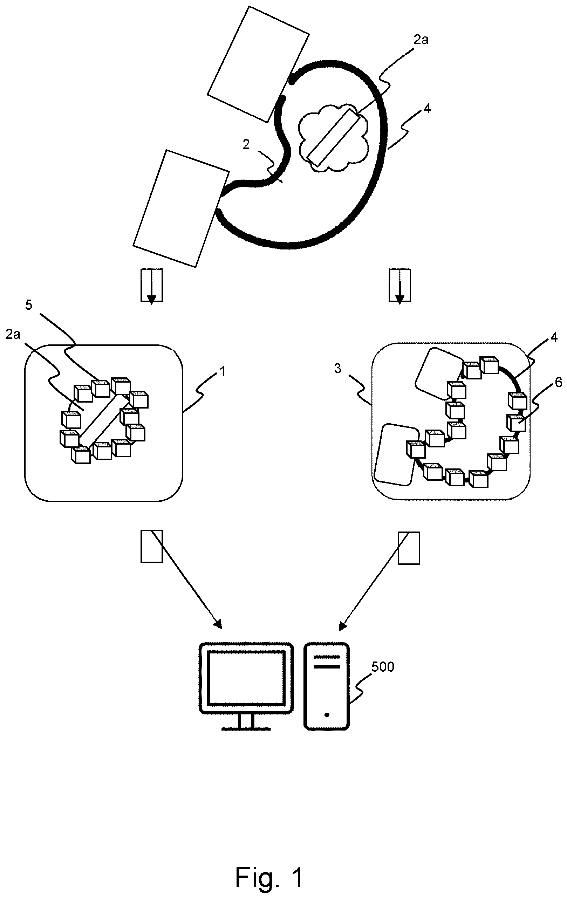

Figure 1 shows a schematic view of first steps of a preferred embodiment of a computer-implemented method for determining a minimum distance between an anatomical surface and a tracer distribution according to an aspect of the invention. The method comprises the steps of receiving, on a computing system 500, 3D functional image data 1 of a tissue specimen 2 including a tracer, for example a radiotracer, from a functional imaging module and receiving 3D anatomical image data 3 from an anatomical imaging module. The functional imaging module and the anatomical imaging module may preferably be a dual imaging module such as a PET-CT imaging module, the functional image data 1 being PET image data and the anatomical image data 3 being CT image data. The tissue specimen 2 may be tumorous tissue 2a, dysplastic tissue, inflamed tissue or any other type of tissue of interest, for example a breast tissue specimen, a liver tissue specimen, or any other body tissue specimen. The tissue may preferably, but need not, be an ex-vivo tissue specimen and may have been obtained by surgical resection from a body in which a tracer has circulated. An example of such a tracer, in particular of a radiotracer, is 18F-fluorodeoxyglucose, commonly known as 18F-FDG, a glucose analogue which is taken up into cells that are metabolically active, such as for example tumour cells. 18F-FDG has a half-life time of more or less 110min. Other isotopes which can be used in nuclear imaging include for example 11C having a half-life time of more or less 20 minutes, or 68-Gallium having a half-life time of more or less 68 minutes. These isotopes can be linked to other molecules (which then become radiotracers), such as PSMA. Other molecules, such as nanobodies, can also be linked to PET-isotopes. To optimize nuclear imaging an optimal time window for administration of the radiotracer can be calculated, taking into account the isotope half-life time and an absorption or uptake time of the radiotracer by the body. It is generally recommended to have an interval in a range of more or less 60 to 90 minutes between the administration of the radiotracer and the imaging, although even after more or less 30 minutes, there may already be a relatively strong uptake of the radiotracer in target cells of the tissue. Too early administration of the radiotracer can lead to a relatively important loss of signal and reduced image quality. Administering a higher dose of the radiotracer to compensate for an early administration can increase radiation load. As is known to the person skilled in the art, the 3D functional image data 1, for example 3D PET imaging data, can provide images of tumorous tissue 2a with a relatively high accuracy while not providing detailed morphological information. The 3D anatomical image data 3, for example 3D CT imaging data, can provide images showing an outer surface of a specimen and provide morphological information on the imaged tissue specimen 2. The 3D functional image data 1 and the 3D anatomical image data 3 are co-registered, which may be done with any known 3D co-registering method by the computing system 500, or, in case of 3D image data acquired by a dual-imaging modality, may have been done by the dual-imaging modality prior to reception by the computing system 500 or by any other computing system.

In a next step, a minimum distance is determined between an outer anatomical boundary 4 of the tissue specimen 2 and the tissue 2a having a tracer uptake above a predetermined threshold. Based on said 3D functional image data 1, a plurality of tracer boundary voxels 5 is selected such that said tracer boundary voxels form an outer bound of a volume having a tracer uptake above a predetermined tracer concentration threshold, which threshold may be adjustable by a user, for example via a user interface. Based on said 3D anatomical image data 3, a plurality of anatomical boundary voxels 6 is selected such that said anatomical boundary voxels 6 form an outer anatomical bound of an anatomical volume of the tissue specimen 2. Then, using nested loops, for each anatomical boundary voxel 6, a minimum distance is determined between said anatomical boundary voxel and each of the voxels of the list of tracer boundary voxels 5. The minimum distance can be for example be determined by determining a Euclidean distance between a predetermined anatomical boundary voxel 6 and each of the tracer boundary voxels 5. The minimal Euclidean distance of all these determined Euclidean distances can then be stored as minimum distance for said predetermined anatomical boundary voxel 6. This procedure can then be repeated for each anatomical boundary voxel 6, thus resulting in a list of minimum distances between the anatomical surface 4 and the tracer distribution 2a above a predetermined tracer uptake threshold.

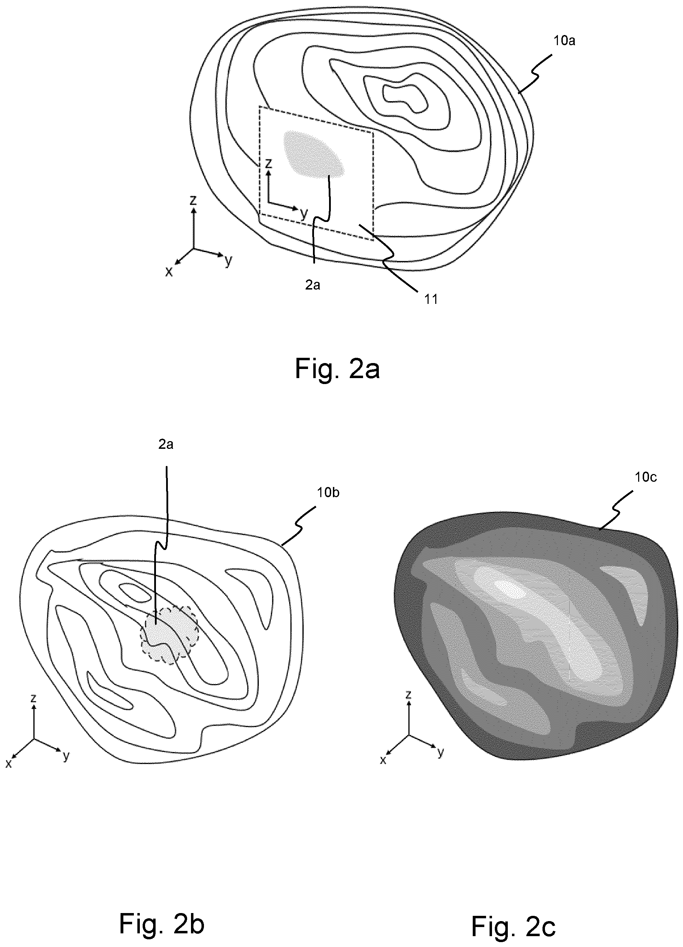

Figures 2a, 2b and 2c show schematic 3D results of a preferred embodiment of the method according to an aspect of the invention. In a final step of the method, said minimum distance for each anatomical boundary voxel 6 is mapped onto the 3D anatomical image data 3 thus providing a 3D minimum distance map 10a, 10b, 10c. It is then preferred that the 3D minimum distance map is displayed as a colour coded map 10c, as shown in Figure 2c, preferably over the 3D anatomical image data, each colour representing a range of minimum distances. Alternatively, as in Figures 2a and 2b, equal value curves or topological lines around the anatomical boundary surface 4 are used instead of colours to display the 3D minimum distance map 10a, 10b. The 3D minimum distance map may simultaneously also be displayable as a 2D sliced minimum distance map 11, for example also including a 2D slice of the tracer uptake 2a of the functional image data 1. The 2D slicing plane 11 intersects the coloured 3D boundary surface 6 of the anatomical image 4. The intersection of the plane and surface form curves in the 2D plane and can preferably retain their colour coding. Thus, in the slice view 11 a user, for example a medical doctor, can still see distance represented as a colour, but instead of a coloured surface, it will be a coloured line. More advantageously, three orthogonal slice views of the 3D minimum distance map may be displayed to see the minimum distance in the slice view in any direction. In Figure 2b, the exterior surface has been rendered at least partially transparent with topological lines or colour so that the functional uptake 2a can still be seen through the outer anatomical surface.

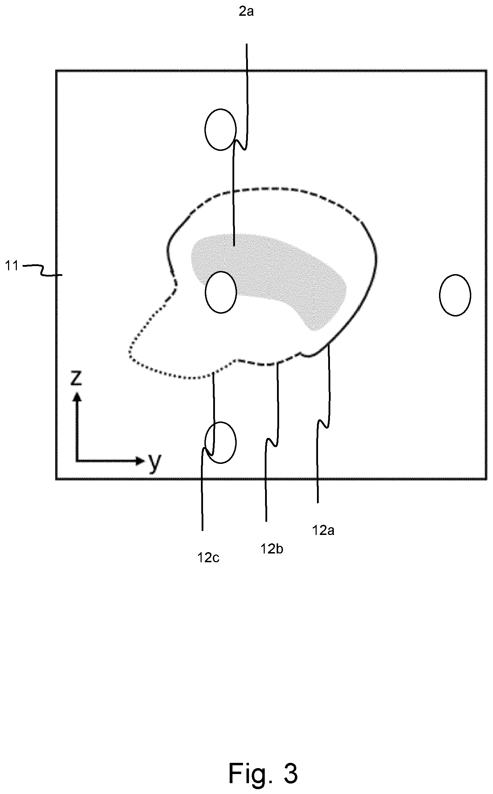

Figure 3 shows a schematic 2D result of a preferred embodiment of the method according to an aspect of the invention. As explained above, the 3D minimum distance map may be displayable as a 2D sliced minimum distance map 11. The intersection of the 2D slice and the anatomical bounding surface 4 forms a closed 2D bounding curve in the slice and can be made to retain the same colour on that curve as the corresponding point on the surface, the colour corresponding to a minimum distance of said anatomical boundary voxel 6 to the plurality of tracer boundary voxels 5. In Figure 3, various colours corresponding to various minimum distances have been represented as different dash styles 12a, 12b, 12c of the line boundary representing the outer anatomical surface boundary 4. In Figure 3, a full line 12a could for example represent a relatively low value of minimum distance and be coloured red as a warning to the user, whereas the dashed lines 12b or dotted line 12c may be coloured orange and green respectively to indicate that the minimum distance between the outer anatomical surface 4 and the tissue 2a having a tracer uptake above a predetermined threshold may be medium to relatively large. In all cases shown in Figures 2a, 2b or 3, these displays of the 3D minimum distance map are an aid to a medical doctor to visually evaluate relatively rapidly resection accuracy, in particular intra-operatively, during surgery, whether or not sufficient tissue has been resected. In this way, follow-up surgery can be avoided.

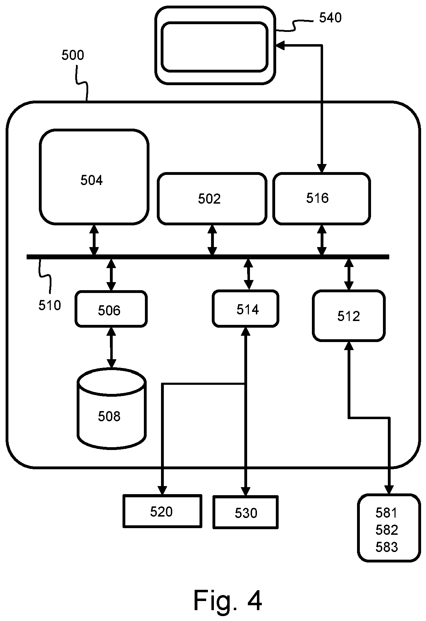

Figure 4 shows a suitable computing system 500 comprising circuitry enabling the performance of steps of embodiments of the computer-implemented method for determining a minimum distance between an anatomical surface and a tracer distribution according to an aspect of the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used.

As used in this application, the term "circuitry" may refer to one or more or all of the following:
(a) hardware-only circuit implementations such as implementations in only analogue and/or digital circuitry and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Computer-implemented method for determining a minimum distance between an anatomical surface and a tracer distribution, the method comprising the steps of
- receiving 3D functional image data of a tissue specimen including a tracer from a functional imaging module;
- receiving 3D anatomical image data from an anatomical imaging module;
- co-registering said 3D functional image data and said 3D anatomical image data;
- based on said 3D functional image data, selecting a plurality of tracer boundary voxels, wherein said tracer boundary voxels form an outer bound of a volume having a tracer uptake above a predetermined tracer concentration threshold;
- based on said 3D anatomical image data selecting a plurality of anatomical boundary voxels, wherein said anatomical boundary voxels form an outer anatomical bound of an anatomical volume;
- for each anatomical boundary voxel, determining a minimum distance between said anatomical boundary voxel and each of the voxels of the list of tracer boundary voxels;
- mapping said minimum distance for each anatomical boundary voxel onto the 3D anatomical image data thus providing a 3D minimum distance map.

2. Method according to claim 1, further comprising the step of displaying the 3D minimum distance map as a colour coded map.

3. Method according to any of the preceding claims, wherein the 3D minimum distance map is displayable as a 2D sliced minimum distance map.

4. Method according to any of the preceding claims, wherein the predetermined tracer concentration threshold is adjustable.

5. Method according to any of the preceding claims, wherein the tissue specimen is an ex-vivo tissue specimen.

6. Method according to any of the preceding claims, wherein the 3D functional image data are PET image data.

7. Method according to any of the preceding claims, wherein the 3D anatomical image data are CT image data.

8. Method according to any of the preceding claims, wherein the 3D functional image data and the 3D anatomical data are dual-modality image data.

9. A controller comprising at least one processor and at least one memory including computer program code, the at least one memory and computer program code configured to, with the at least one processor, cause the controller to perform the method according to any of the preceding claims 1 - 8.

10. A computer program product comprising computer-executable instructions for performing the method according to any of the preceding claims 1 - 8 when the program is run on a computer.

11. A computer readable storage medium comprising computer-executable instructions for performing the methods according to any of the preceding claims 1 - 8 when the program is run on a computer.
